(19) Europäisches Patentamt
European Patent Office
Office européen des brevets

(11) **EP 2 581 700 A1**

(12) **EUROPEAN PATENT APPLICATION**

(43) Date of publication:
**17.04.2013 Bulletin 2013/16**

(51) Int Cl.:
***G01B 9/02*** *(2006.01)*

(21) Application number: **12006482.9**

(22) Date of filing: **14.09.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.10.2011 JP 2011224306**

(71) Applicant: **Canon Kabushiki Kaisha**
**Ohta-ku**
**Tokyo (JP)**

(72) Inventor: **Yamada, Akihiro**
**Tokyo (JP)**

(74) Representative: **Weser, Thilo**
**Weser & Kollegen**
**Patentanwälte**
**Radeckestrasse 43**
**81245 München (DE)**

(54) **Absolute distance measurement with multiple-wavelength interferometer**

(57)    A measurement apparatus includes: a first light source (1) which generates first light containing a scan section in which a wavelength is scanned between a first wavelength and a second wavelength; a second light source (2) which generates second light having a third wavelength; a first detector (10c) and a second detector (10b) which respectively detect first and second interference signals generated by irradiating a reference surface (6) and a test surface (7) with the first and second light; a calculation unit (8) which calculates, based on data of a phase of the second interference signal, one of the position and shape of the test surface by using the third wavelength as a measurement wavelength that determines a measurement range.

**F I G.  1**

**Description**

BACKGROUND OF THE INVENTION

Field of the Invention

The present invention relates to a measurement apparatus which measures the position or shape of a surface to be measured.

Description of the Related Art

An interferometer is generally known as an apparatus which measures a shape or the like at high precision. When a surface to be measured has a step equal to or larger than half the wavelength of measurement light, an interferometer using single-wavelength light cannot determine the height of the step and thus cannot measure the shape of the surface to be measured or the like. When a surface to be measured is rough, a speckle pattern arising from the surface roughness has a random phase with a standard deviation of larger than $2\pi$. For this reason, measurement uncertainty increases in the interferometer using single-wavelength light.

To solve these problems, there is known an interferometer which measures an interference at different wavelengths and combines the phases of the respective wavelengths. For example, when two different wavelengths $\lambda_1$ and $\lambda_2$ ($\lambda_1 > \lambda_2$) are used, this interferometer can measure a step large up to half the synthetic wavelength $\Lambda = \lambda_1 \times \lambda_2/(\lambda_1 - \lambda_2)$, and can widen the measurement range, compared to the interferometer using only single-waveform light. Interferometers using synthetic-wavelength light are disclosed in Japanese Patent Laid-Open Nos. 5-52540 and 10-281738. In Japanese Patent Laid-Open No. 5-52540, the interferometer uses a multi-mode laser as a light source. The interferometer causes a plurality of wavelengths to simultaneously interfere with each other, and separates them via a diffraction grating, thereby detecting the phases of the respective wavelengths. In Japanese Patent Laid-Open No. 10-281738, the interferometer uses a laser light source which simultaneously oscillates a plurality of wavelengths. The interferometer causes a plurality of wavelengths to simultaneously interfere with each other, and separates them via a dichroic mirror, thereby detecting the phases of the respective wavelengths.

According to "High-order statistical properties of speckle fields and their application to rough-surface interferometry", U. Vry and F. Fercher, J. Opt. Soc. Am. A, 3, 7, 988 - 1000 (1986), if the speckles of two wavelengths have a correlation, a macroscopic surface profile and information about microscopic surface roughness are obtained from the phase difference between these two wavelengths. The correlation between the speckles of two wavelengths depends on a synthetic wavelength. This correlation decreases as the synthetic wavelength is smaller, and increases as it is larger. From this, an interferometer using multi-wavelength light can measure at high precision even an object to be measured having a rough surface, which is difficult to measure by an interferometer using single-wavelength light.

When the interferometer using multi-wavelength light widens the measurement range, the wavelength difference between different wavelengths needs to be decreased. For example, a case in which a measurement range of 10 mm (optical path length difference of 20 mm) is measured using multi-wavelength light will be examined. Measurement using a synthetic wavelength of two wavelengths requires a wavelength $\lambda_{11}$ = 1500.000 nm and a wavelength $\lambda_{12}$ = 1500.113 nm (wavelength difference of 113 pm). Separating two wavelengths using a diffraction grating configured to separate the wavelength difference of 113 pm requires a very large, high-precision diffraction optical element, implementation of which is difficult.

In a method of separating wavelengths by a thin film (dichroic mirror) as disclosed in Japanese Patent Laid-Open No. 10-281738, it is difficult to form a thin-film arrangement having such a spectral characteristic as to separate the wavelength difference of 113 pm. As another method for ensuring the 10-mm measurement range, three wavelengths can be used for measurement. For example, a synthetic wavelength $\Lambda_{212}$ = 114.000 $\mu$m is formed from two wavelengths $\lambda_{21}$ = 1500.00 nm and $\lambda_{22}$ = 1520.000 nm (wavelength difference of 20 nm). In addition, a synthetic wavelength $\Lambda_{213}$ = 114.653 $\mu$m is formed from two wavelengths $\lambda_{21}$ = 1500.000 nm and $\lambda_{23}$ = 1480.629 nm (wavelength difference of 19.371 nm) . A synthetic wavelength $\Lambda_2$ of the synthetic wavelengths $\Lambda_{212}$ and $\Lambda_{213}$ becomes $\Lambda_2$ = 20 mm. A necessary waveform difference to be separated becomes 19.371 nm, and the 10-mm measurement range can be obtained. However, when a surface to be measured is rougher than that in "High-order statistical properties of speckle fields and their application to rough-surface interferometry", U. Vry and F. Fercher, J. Opt. Soc. Am. A, 3, 7, 988 - 1000 (1986), the correlation between speckles arising from roughness decreases as the wavelength difference increases. Thus, the detection precision becomes lower in the three-wavelength arrangement than in the two-wavelength arrangement.

SUMMARY OF THE INVENTION

The present invention provides a measurement apparatus which implements a wide measurement range and high measurement precision with a simple arrangement.

The present invention provides a measurement apparatus as specified in claims 1 to 8.

Further features of the present invention will become apparent from the following description of exemplary embodiments with reference to the attached drawings.

BRIEF DESCRIPTION OF THE DRAWINGS

Fig. 1 is a view showing the arrangement of a measurement apparatus;

Figs. 2A and 2B are flowcharts showing a measurement method;

Fig. 3 is a chart showing transition of the wavelengths of a plurality of light sources;

Fig. 4 is a chart showing a case in which the shape of a surface to be measured falls within the measurement range of a measurement wavelength; and

Fig. 5 is a chart showing a case in which the shape of a surface to be measured falls outside the measurement range of the measurement wavelength.

DESCRIPTION OF THE EMBODIMENTS

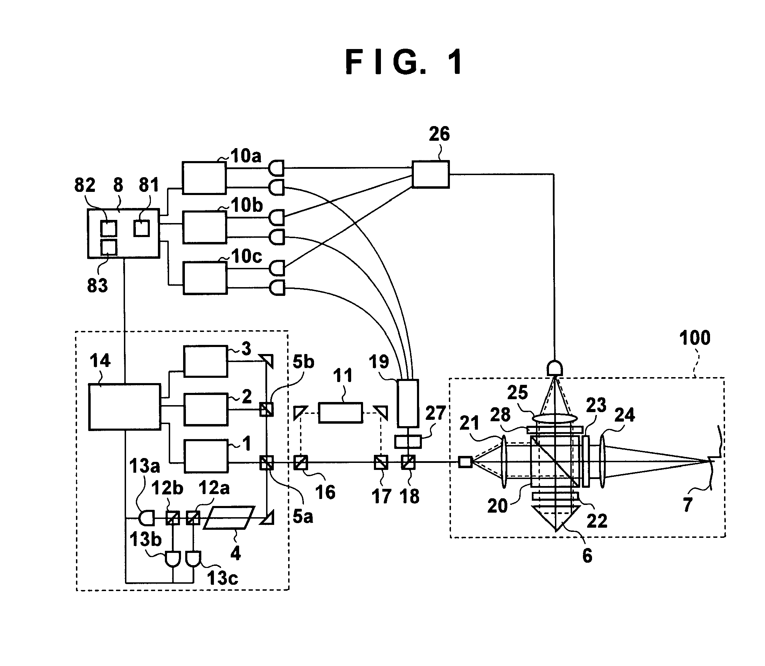

An embodiment of a measurement apparatus which detects an interference fringe generated by an interference between reference light irradiating a reference surface and measurement light irradiating a surface to be measured (a test surface), and measures the position or shape of the surface to be measured will be described in detail below with reference to the accompanying drawings. As shown in Fig. 1, the measurement apparatus according to the embodiment includes a first light source (wavelength-tunable laser) 1, a second light source (fixed-wavelength laser) 2, a third light source (fixed-wavelength laser) 3, and a gas cell 4 serving as a wavelength reference element. The wavelength-tunable laser 1 generates the first light containing a scan section in which the wavelength is scanned between the first wavelength $\lambda_1$ and the second wavelength $\lambda_2$. The fixed-wavelength laser 2 generates the second light having the third wavelength $\lambda_3$. The fixed-wavelength laser 3 generates the third light having the fourth wavelength $\lambda_4$.

The measurement apparatus also includes a polarizing beam splitter 20, a reference surface 6, and first to third detectors 10c to 10a which detect an interference fringe arising from an optical path difference between the reference surface 6 and a surface 7 to be measured. The first detector 10c detects the first interference fringe generated upon irradiating the reference surface 6 and the surface 7 to be measured with the first light which has been generated by the wavelength-tunable laser 1 and has a wavelength scanned between the wavelength $\lambda_1$ and the second wavelength $\lambda_2$. The second detector 10b detects the second interference fringe generated upon irradiating the reference surface 6 and the surface 7 to be measured with the second light of the wavelength $\lambda_3$ generated by the fixed-wavelength laser 2. The third detector 10a detects the third interference fringe generated upon irradiating the reference surface 6 and the surface 7 to be measured with the third light of the wavelength $\lambda_4$ generated by the fixed-wavelength laser 3.

The measurement apparatus further includes a calculation unit 8 which calculates the absolute distance of the surface 7 to be measured from the reference surface 6. The fixed-wavelength lasers 2 and 3 generate the first synthetic wavelength, and the wavelength-tunable laser 1 in which the wavelength is scanned generates the second synthetic wavelength. The first synthetic wavelength is represented by a wavelength $\Lambda_{34} (= \lambda_3 \times \lambda_4/|\lambda_3 - \lambda_4|)$ obtained by dividing the product of the third and fourth wavelengths by the difference between the third and fourth wavelengths. The second synthetic wavelength is represented by a wavelength $\Lambda_{12} (= \lambda_1 \times \lambda_2/|\lambda_1 - \lambda_2|)$ obtained by dividing the product of the first and second wavelengths by the difference between the first and second wavelengths.

In the embodiment, the second synthetic wavelength $\Lambda_{12}$ is much longer than the first to fourth wavelengths $\lambda_1$ to $\lambda_4$, and has a low measurement precision but a wide measurement range. In contrast, the first synthetic wavelength $\Lambda_{34}$ is shorter than the first to fourth wavelengths $\lambda_1$ to $\lambda_4$ and the second synthetic wavelength $\Lambda_{12}$. Hence, the first synthetic wavelength $\Lambda_{34}$ has a high measurement precision but a narrow measurement range, compared to the first to fourth wavelengths $\lambda_1$ to $\lambda_4$ and the second synthetic wavelength $\Lambda_{12}$.

Based on phase data of the second and third interference fringes detected by the second and third detectors 10b and 10a, the calculation unit 8 in the embodiment calculates the position and shape of the surface 7 to be measured by using the high-measurement-precision first synthetic wavelength $\Lambda_{34}$ as a measurement wavelength which determines a measurement range. The shape of a surface to be measured can be obtained by measuring the distance of the surface to be measured from the reference surface and connecting the distances (positions) of respective points on the surface to be measured. However, when a step larger than $\Lambda_{34}/2$ exists on the surface 7 to be measured, the interference order of the first synthetic wavelength $\Lambda_{34}$ cannot be obtained from phase data of the first synthetic wavelength $\Lambda_{34}$ after the time (first time) when the step was detected. Neither the position nor shape of the surface 7 to be measured can be calculated any more.

To solve this, the interference order of the first synthetic wavelength $\Lambda_{34}$ is determined from that of the second synthetic wavelength $\Lambda_{12}$ by connecting the second synthetic wavelength $\Lambda_{12}$ equal to or larger than the step, and the

first synthetic wavelength $\Lambda_{34}$. With this arrangement, the measurement apparatus can greatly reduce the wavelength scan amount of the wavelength-tunable laser 1 and ensure a large measurement range. Since the wavelength can be scanned by modulating a laser current, the measurement apparatus quickly measures the absolute distance of the surface 7 to be measured.

A beam emitted by the wavelength-tunable laser 1 is divided by a beam splitter 5a. A beam emitted by the fixed-wavelength laser 2 different in wavelength from the wavelength-tunable laser 1 is incident on a beam splitter 5b, deflected, and then incident on the beam splitter 5a. This beam becomes coaxial with the beam emitted by the wavelength-tunable laser 1, and is divided at the same time. A beam emitted by the fixed-wavelength laser 3 different in wavelength from the wavelength-tunable laser 1 and fixed-wavelength laser 2 is incident on and passes through the beam splitter 5b, and then is incident on the beam splitter 5a. This beam becomes coaxial with the beam emitted by the wavelength-tunable laser 1, and is divided at the same time.

One beam divided by the beam splitter 5a passes through the gas cell 4, and is separated into beams of the wavelength-tunable laser 1, fixed-wavelength laser 2, and fixed-wavelength laser 3 via spectral elements 12a and 12b. After transmission through the gas cell 4, a detector 13a detects the amount of beam of the wavelength-tunable laser 1, a detector 13b detects that of beam of the fixed-wavelength laser 2, and a detector 13c detects that of beam of the fixed-wavelength laser 3. The wavelength-tunable laser 1, fixed-wavelength laser 2, and fixed-wavelength laser 3 adopt identical DFB (Distributed FeedBack) semiconductor lasers. In the embodiment, the wavelength-tunable laser 1, fixed-wavelength laser 2, and fixed-wavelength laser 3 are separate lasers. However, a plurality of semiconductor lasers may be integrated on one element, similar to a multi-wavelength light source used in optical communication. This structure is advantageous in cost and dimensions.

A laser controller 14 controls to stabilize the wavelength of the fixed-wavelength laser 2 to the wavelength $\lambda_3$ serving as an absorption line of the gas cell 4 by using a signal from the detector 13b. The wavelength is stabilized by adjusting the wavelength of the fixed-wavelength laser 2 by the laser controller 14 to keep the transmission intensity of the detector 13b constant. To adjust the wavelength of the fixed-wavelength laser 2, the laser controller 14 modulates an injection current. Similarly, the laser controller 14 controls to stabilize the wavelength of the fixed-wavelength laser 3 to the wavelength $\lambda_4$ serving as an absorption line of the gas cell 4 by using a signal from the detector 13c.

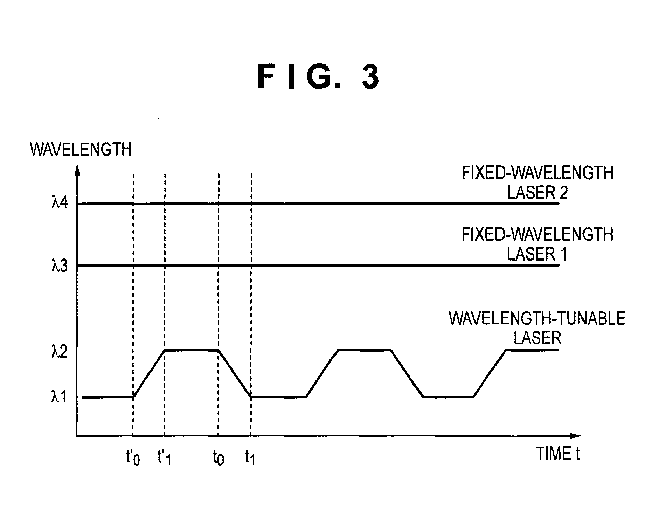

The wavelength-tunable laser 1 is stabilized at the transmission spectrum of the gas cell 4 that corresponds to the wavelength $\lambda_1$. After the stabilization control is canceled and the wavelength is scanned to the wavelength $\lambda_2$ by current modulation, the wavelength is stabilized at the wavelength $\lambda_2$. This also applies to wavelength scanning from the wavelength $\lambda_2$ to the wavelength $\lambda_1$. In this manner, the wavelength-tunable laser 1 can be stabilized at either of at least two reference wavelengths $\lambda_1$ and $\lambda_2$, and scans the wavelength between $\lambda_1$ and $\lambda_2$ periodically at high speed. Fig. 3 shows temporal changes of the wavelengths of the wavelength-tunable laser 1, fixed-wavelength laser 2, and fixed-wavelength laser 3 in the embodiment. The embodiment guarantees the wavelength precision using only the gas cell 4. However, an etalon may be used for wavelength guarantee as long as the following precision conditions for order determination are satisfied. Both the gas cell 4 and etalon may be employed.

The other beam divided by the beam splitter 5a is further divided into the first and second beams by a polarizing beam splitter (first polarizing beam splitter) 16. The first beam propagates up to a polarizing beam splitter (second polarizing beam splitter) 17. The second beam is incident on a modulator (wavelength shifter) 11 which modulates the second beam at a predetermined frequency. The wavelength shifter 11 applies a predetermined amount of frequency shift dv to incident wavelengths by an acoustooptic element (not shown) for beams output from the wavelength-tunable laser 1 and fixed-wavelength lasers 2 and 3. A beam emerging from the wavelength shifter 11 propagates up to the polarizing beam splitter 17. The first and second beams are combined by the polarizing beam splitter 17 to travel along a common optical path again. Then, a beam splitter 18 branches the combined beam into two. One branched beam passes through a polarizer 27 and is incident on a spectral element 19.

The spectral element 19 separates the coaxially incident beams of the wavelength-tunable laser 1, fixed-wavelength laser 2, and fixed-wavelength laser 3. As the spectral element 19, an array waveguide diffraction grating is used. As the spectral element 19 other than the array waveguide diffraction grating, a prism or bulk diffraction grating is also available. As an interference signal between the first and second beams having the wavelength $\lambda_1$ via the spectral element 19, the first detector 10c detects a beat signal corresponding to the frequency difference between these two beams. As an interference signal between the first and second beams having the wavelength $\lambda_3$, the second detector 10b detects a beat signal corresponding to the frequency difference between these two beams. Similarly, as an interference signal between the first and second beams having the wavelength $\lambda_4$, the third detector 10a detects a beat signal corresponding to the frequency difference between these two beams. In the first to third detectors 10c to 10a, an interference signal is obtained by extracting the common polarized component of the first and second beams by a polarizer. Interference signals detected by the first to third detectors 10c to 10a via the spectral element 19 will be referred to as reference signals.

The other beam branched by the beam splitter 18 is incident on an interferometer 100 which measures a distance. A collimator lens 21 collimates the beam incident on the interferometer 100 into parallel light. The polarizing beam splitter 20 in the interferometer 100 is arranged to transmit the first beam and reflect the second beam. The second beam reflected by the polarizing beam splitter 20 is changed into circularly polarized light by a $\lambda/4$ plate 22, reflected by the reference surface 6 serving as a cube corner reflector, and changed into reverse circularly polarized light. The second beam passes through the $\lambda/4$ plate 22 again, is changed into linearly polarized light having a polarization plane rotated by 90° from that upon incidence, and then incident on the polarizing beam splitter 20 again. The second beam passes through the polarizing beam splitter 20 and then through a polarizer 28, is condensed by a condenser lens 25, and incident on a spectral element 26.

The first beam having passed through the polarizing beam splitter 20 is changed into circularly polarized light by a $\lambda/4$ plate 23, and is condensed on the surface 7 to be measured as a convergent beam via a condenser lens 24. The first beam is reflected by the surface 7 to be measured, and changed into reverse circularly polarized light. The first beam passes through the $\lambda/4$ plate 23 again, is changed into linearly polarized light having a polarization plane rotated by 90° from that upon incidence, and then incident on the polarizing beam splitter 20 again. The first beam is reflected by the polarizing beam splitter 20, condensed by the condenser lens 25, and incident on the spectral element 26. A beam reflected by the reference surface 6 will be referred to as a reference beam, and a beam reflected by the surface 7 to be measured will be referred to as a measurement beam. To obtain a high-contrast interference signal, the reference beam and measurement beam can have the same intensity. The intensity can be adjusted by rotating the polarizer 28 by a rotation mechanism (not shown). The intensity of the reference beam or measurement beam may be adjusted using an ND filter or the like (not shown).

The first detector 10c detects the interference signal of the reference beam and measurement beam having the wavelength $\lambda_1$ that have been incident on the spectral element 26. The second detector 10b detects the interference signal of the reference beam and measurement beam having the wavelength $\lambda_3$. The third detector 10a detects the interference signal of the reference beam and measurement beam having the wavelength $\lambda_4$. The interference signals detected by the first to third detectors 10c to 10a via the spectral element 26 will be referred to as measurement signals. As an interference signal between the first and second beams, the measurement signal serves as a beat signal corresponding to the frequency difference between these two beams, similar to the reference signal. However, the phase of the interference signal is different from that of the reference signal owing to an optical path length difference between measurement light and reference light.

The polarizing beam splitter 20 capable of dividing a beam into polarized components is used as an element for dividing a beam from the interferometer 100. As the effect of using the polarizing beam splitter 20, beams reflected by the reference surface 6 and the surface 7 to be measured can be separated by polarization. By utilizing this effect, heterodyne detection becomes possible between the surface 7 to be measured and the reference surface 6 by slightly adding a frequency shift difference between two orthogonal polarizations, thereby implementing high-precision phase measurement. The embodiment is configured as an interferometer which measures the distance of the surface 7 to be measured. However, the present invention is also applicable to shape measurement to obtain surface shape information of the surface 7 to be measured by placing the surface 7 to be measured on a stable drivable in the X-Y plane. Instead of a driving stage, a galvano-mirror may be interposed between the interferometer 100 and the surface 7 to be measured.

The calculation unit 8 includes at least a memory 81, first calculation unit 82, and second calculation unit 83. The memory 81 stores the phase measurement results of the light sources 1 to 3. The first calculation unit 82 receives a reference signal and measurement signal, and calculates the absolute distance between the surface 7 to be measured and the reference surface 6. When the height difference on the surface 7 to be measured exceeds the measurement range of the first synthetic wavelength $\Lambda_{34}$ of the wavelengths $\lambda_3$ and $\lambda_4$, or when light from the light source is temporarily cut off and the interference order of the first synthetic wavelength $\Lambda_{34}$ becomes unknown, the second calculation unit 83 determines the interference order later. The calculation unit 8 is connected to the laser controller 14, and also controls the wavelength of the wavelength-tunable laser 1 according to a measurement sequence. When a plurality of interferometers 100 are arranged for one light source unit, the embodiment can easily cope with this arrangement by dividing a beam between the light source unit and the beam splitter 16.

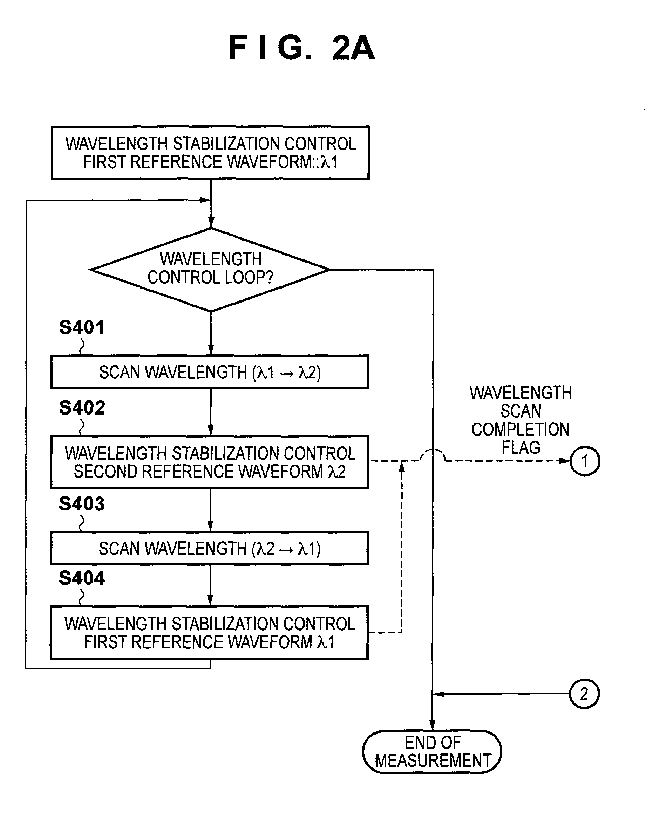

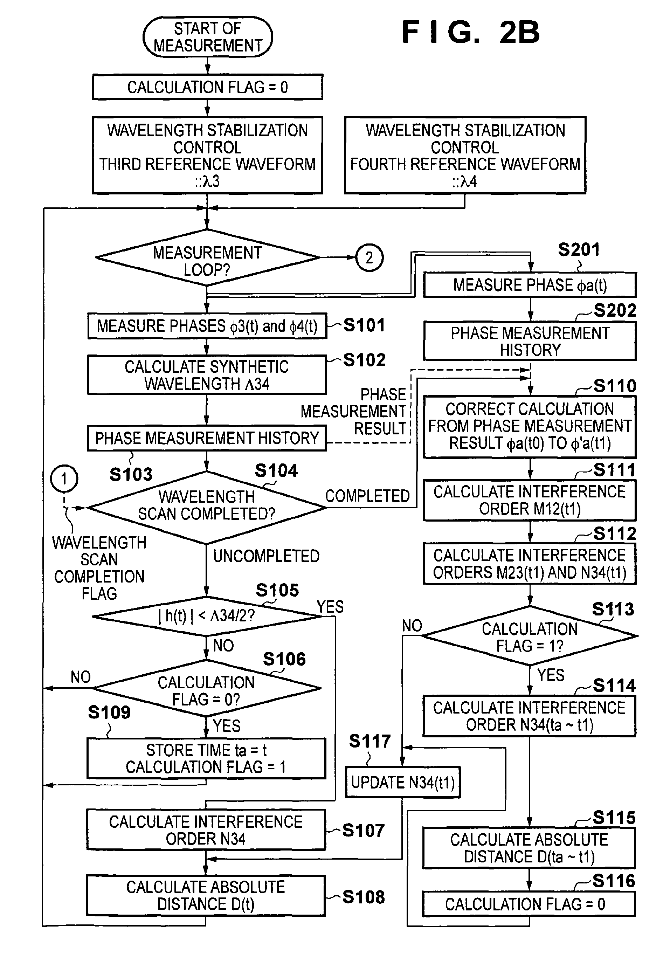

Next, a measurement method according to the embodiment will be explained with reference to Figs. 2A and 2B. At the start of measurement, the calculation unit 8 sets a calculation flag to 0. The calculation flag is a determination flag which becomes 1 when the height difference on the surface 7 to be measured exceeds half of $\Lambda_{34}$ at an interval between the start time $t'_0$ of a wavelength scan and the end time $t_1$ of the next wavelength scan; otherwise, 0. The function of this calculation flag will be described later.

The measurement sequence is roughly divided into two loops. One is a wavelength control loop, and the other is a measurement loop. In the wavelength control loop, as shown in Fig. 3, it is repeated to scan the wavelength-tunable laser 1 between the reference wavelengths $\lambda_1$ and $\lambda_2$, and control it to stabilize at either reference wavelength. In steps S402 and S404, upon completion of control to the reference wavelength, the calculation unit 8 transmits, to step S104, a flag representing the completion of the wavelength scan. Upon receiving this flag, the calculation unit 8 determines in step S104 whether the wavelength scan has been completed.

The measurement loop will be described. In the measurement loop, while scanning the wavelength of the wavelength-tunable laser 1 between the first reference wavelength $\lambda_1$ and the second reference wavelength $\lambda_2$, the phase is repetitively measured at the scanned wavelength and the third and fourth reference wavelengths $\lambda_3$ and $\lambda_4$ of the fixed-wavelength lasers 2 and 3. Phase measurement between the times to and $t_1$ will be exemplified. In steps S101 and S201, the first to third detectors 10c to 10a measure phases at the third reference wavelength $\lambda_3$, fourth reference wavelength $\lambda_4$, and second reference wavelength $\lambda_2$. Phase measurement is measurement of a phase difference between a measurement signal and a reference signal. The calculation unit 8 measures the phases of the reference signal and measurement signal using a phase meter, and calculates a difference between them, obtaining a phase difference. The memory 81 in Fig. 1 stores the obtained phase difference.

In step S101, phase differences $\phi_k$ ($k = 3, 4$) measured by the second and third detectors 10b and 10a are given by

$$\phi_k(t) = 2\pi \times 2D(t)/\lambda_k \quad (k = 3, 4) \quad \ldots(1)$$

A phase difference $\phi a(t_0)$ using light from the wavelength-tunable laser 1 that is measured by the first detector 10c in step S201 is given by

$$\phi_a(t_0) = 2\pi \times 2D(t_0)/\lambda_2 \quad \ldots(2)$$

As shown in Fig. 3, the wavelength of the wavelength-tunable laser at the time $t_0$ is $\lambda_2$. D is the absolute distance between the reference surface and the surface to be measured.

In step S102, the calculation unit 8 calculates the phase difference $\phi_{34}(t)$ of the first synthetic wavelength $\Lambda_{34}$ of $\lambda_3$ and $\lambda_4$ using equation (3) from the phase differences $\phi_3$ and $\phi_4$ measured in step S101:

$$\phi_{34}(t) = \phi_4(t) - \phi_3(t) \quad \ldots(3)$$

Note that the first synthetic wavelength $\Lambda_{34}$ is much shorter than the second synthetic wavelength $\Lambda_{12}$ of $\lambda_1$ and $\lambda_2$, and can measure the distance and shape of the surface 7 to be measured at the highest precision. The embodiment prepares the fixed-wavelength laser 2 having the wavelength $\lambda_3$ and the fixed-wavelength laser 3 having the wavelength $\lambda_4$ in order to obtain a synthetic wavelength of short wavelengths capable of measuring the distance and shape of the surface 7 to be measured at the highest precision. However, for example, if the wavelength $\lambda_3$ of the fixed-wavelength laser 2 is a wavelength capable of measuring the distance and shape of the surface 7 to be measured at high precision, the fixed-wavelength laser 3 may be omitted.

In steps S103 and S202, the calculation unit 8 stores, in the memory 81, the histories of the phase difference $\phi_{34}(t)$ of the synthetic wavelength $\Lambda_{34}$ and the phase difference $\phi_a(t_0)$ of the tunable laser which have been measured and calculated in steps S101, S102, and S201. In step S104, the calculation unit 8 determines, based on the wavelength scan completion flags transmitted in steps S402 and S404 of the measurement loop, whether the wavelength scan has been completed. If the wavelength scan has not been completed, the process advances to step S105; if it has been completed, to step S110.

First, a case in which it is determined in step S104 that the wavelength scan has not been completed will be explained. In this case, in step S105, the calculation unit 8 determines whether a conditional expression given by equation (4) is satisfied:

$$|h(t)| < \Lambda_{34}/2 \quad \ldots(4)$$

where h(t) is the difference between the distance of the surface 7 to be measured at the time $t'_1$ and that of the surface to be measured at the time $t_a$. If the condition of equation (4) is not satisfied, the height difference on the surface 7 to be measured exceeds the measurement range ($\Lambda_{34}/2$) of the synthetic wavelength $\Lambda_{34}$ after the time ($t = t'_1$) when the previous wavelength scan was completed, failing in determining phase connection. When a step on the surface 7 to be measured that exceeds the measurement range is measured, the light amount changes abruptly. Therefore, a threshold is set in advance for the change amount of light amount variations on a light amount monitor (not shown in Figs. 2A and 2B). When the light amount exceeds the threshold, it is determined that the condition of equation (4) is not satisfied any more. If the schematic shape of the surface 7 to be measured is known in advance, the presence of a step may be determined based on the shape information.

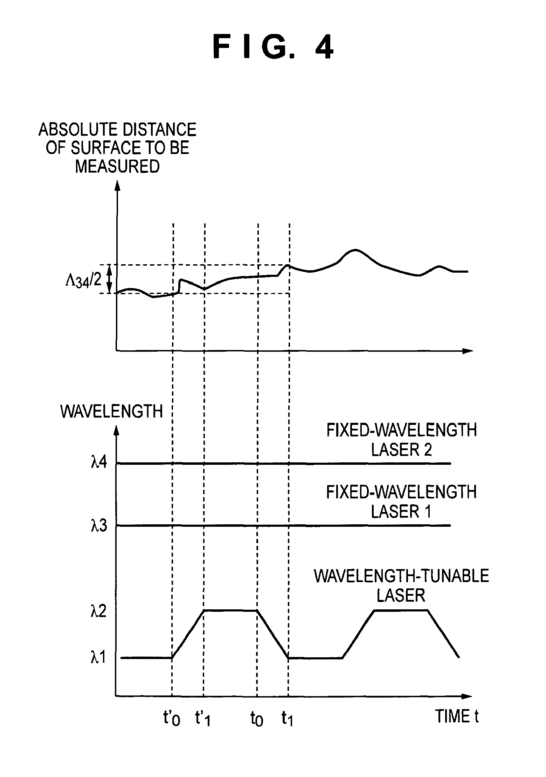

A case in which a step on the surface 7 to be measured is small at the interval between the start time $t'_0$ of the wavelength scan and the end time $t_1$ of the next wavelength scan, as shown in Fig. 4, and equation (4) is not satisfied in step S105 (NO in step S105) will be explained. In step S107, the calculation unit 8 calculates an interference order $N_{34}$ in accordance with equation (5) using an interference order $N_{34}(i)$ and phase difference measurement result $\phi_{34}(i)$ in previous measurement, and the current phase difference measurement result $\phi_{34}(i+1)$:

$$N_{34}(i+1) = N_{34}(i) + \text{round}(\phi_{34}(i+1) - \phi_{34}(i)) \quad ...(5)$$

In step S108, the first calculation unit 82 of the calculation unit 8 calculates the absolute distance D of the surface 7 to be measured in accordance with equation (6) using a relative phase change of the first synthetic wavelength $\Lambda_{34}$:

$$D(t) = (\Lambda_{34}/2) \times \{N_{34}(t) + \phi_{34}(t)/(2\pi)\} \quad ...(6)$$

If the condition of equation (4) is satisfied, the absolute distance D is calculated using high-speed relative measurement and the interference order $N_{34}$ until the next wavelength scan completion flag is confirmed. After that, the process returns to the measurement loop.

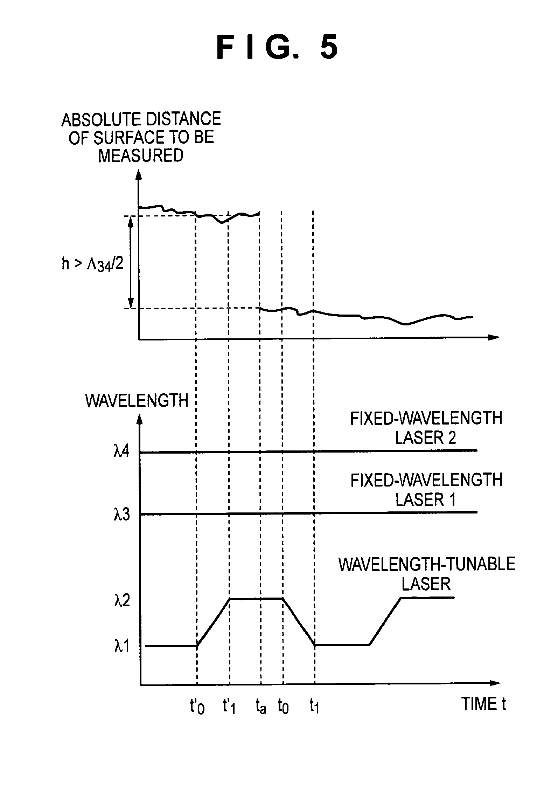

Next, a case in which the surface 7 to be measured has a step satisfying equation (4) in step S105 at the time (first time) $t = t_a$ between the time $t'_0$ when a given scan section started and the time (second time) $t_1$ when the next scan section has ended (YES in step S105), as shown in Fig. 5, will be described. If the calculation flag is 0 in step S106, the calculation unit 8 stores the measurement time $t_a$ of the step on the surface 7 to be measured in the memory 81 in step S109. The calculation unit 8 changes the calculation flag to 1. Until the next wavelength scan is completed from this stage, neither the interference order $N_{34}$ nor the absolute measured distance D(t) is calculated, and the process returns to the measurement loop. If the calculation flag is 1 in step S106, the process directly returns to the measurement loop.

Next, a case in which it is determined in step S104 that the wavelength scan has been completed will be explained. The phase difference $\phi_a(t_1)$ using light from the wavelength-tunable laser 1 at time $t_1$ is calculated based on equation (7):

$$\phi_a(t_1) = 2\pi \times 2D(t_1)/\lambda_1 \quad ...(7)$$

The phase of the wavelength-tunable laser 1 at the time $t_1$ is calculated by adding, to the phase difference $\phi_a(t_0)$ using light from the wavelength-tunable laser 1 at the time to, a relative displacement $\Delta D(t_0 \sim t_1)$ calculated from a continuous phase difference change between $t_0$ and $t_1$ using the high-precision first synthetic wavelength $\Lambda_{34}$. More specifically, in step S202, the calculation unit 8 calculates a phase difference $\phi'_a(t_1)$ at the wavelength $\lambda_1$ and an absolute distance $D(t_1)$ using equation (8) from the phase difference measurement result $\phi_a(t_0)$ held in the history:

$$\phi'_a(t_1) = 2\pi\{\phi_a(t_0)/2\pi\} + 2\Delta D(t_0 \sim t_1)/\lambda_1\} \quad ...(8)$$

where

$$\Delta D(t_0 \sim t_1) = (\Lambda_{34}/2\pi) \times \{\phi_{34}(t_1) - \phi_{34}(t_0)\} \quad ...(9)$$

The phase difference $\phi'_a(t_1)$ using light from the wavelength-tunable laser 1 at the time $t_1$ serves as the correction value of the phase difference $\phi_a(t_1)$ calculated based on equation (7).

In step S111, the calculation unit 8 calculates an interference order $M_{12}(t_1)$ at the time $t_1$ using equation (10):

$$M_{12}(t_1) = \{2D(t_1)/\Lambda_{12}\} - \{(\phi_a(t_1) - \phi'_a(t_1))/2\pi\} \quad \ldots(10)$$

where $\Lambda_{12}$ is the synthetic wavelength of the wavelengths $\lambda_1$ and $\lambda_2$.

In step S112, the calculation unit 8 calculates the interference order $N_{34}(t_1)$ of measurement using the synthetic wavelength $\Lambda_{34}$. In step S112, the calculation unit 8 calculates the interference order $M_{23}(t_1)$ of measurement using the synthetic wavelength $\Lambda_{234}$ of the wavelength $\lambda_2$ and synthetic wavelength $\Lambda_{34}$. First, solving equation (10) for $D(t_1)$ yields

$$D(t_1) = (\Lambda_{12}/2) \times \{M_{12}(t_1) + (\phi_a(t_1) - \phi'_a(t_1))/2\pi\} \quad \ldots(11)$$

$D(t_1)$ is given by equations (12) and (13) using the synthetic wavelengths $\Lambda_{34}$ and $\Lambda_{234}$:

$$D(t_1) = (\Lambda_{34}/2) \times \{N_{34}(t_1) + (\phi_{34}(t_1)/2\pi)\} \quad \ldots(12)$$

$$D(t_1) = (\Lambda_{234}/2) \times \{M_{23}(t_1) + (\phi_{34}(t_1) - \phi_a(t_1))/2\pi\} \quad \ldots(13)$$

Equations (12) and (13) are solved for $N_{34}(t_1)$, and equations (11) and (13) are solved for $M_{23}(t_1)$. Then, $N_{34}(t_1)$ and $M_{23}(t_1)$ are represented by equations (14) and (15):

$$N_{34}(t_1) = \text{round}(\{M_{23}(t_1) + (\phi_{34}(t_1) - \phi_a(t_1))/2\pi\}(\Lambda_{234}/\Lambda_{34}) - \{\phi_{34}(t_1)/2\pi\}) \quad \ldots(14)$$

$$M_{23}(t_1) = \text{round}(\{M_{12}(t_1) + (\phi_a(t_1) - \phi'_a(t_1))/2\pi\}(\Lambda_{12}/\Lambda_{234}) - \{(\phi_{34}(t_1) - \phi_a(t_1))/2\pi\}) \quad \ldots(15)$$

The calculation unit 8 calculates $M_{23}(t_1)$ using equation (15) from $M_{12}(t_1)$ calculated in step S111, and $N_{34}(t_1)$ using equation (14) from calculated $M_{23}(t_1)$. The three synthetic wavelengths $\Lambda_{34}$, $\Lambda_{234}$, and $\Lambda_{12}$ have a relation of $\Lambda_{34} \ll \Lambda_{234} \ll \Lambda_{12}$. The longest wavelength $\Lambda_{12}$ has the largest reference wavelength, can continuously measure the surface 7 to be measured even if a step exists on the surface 7 to be measured, but is poor in measurement precision. If the shortest synthetic wavelength $\Lambda_{34}$ is used, the distance and shape of the surface 7 to be measured can be measured at the highest precision, but the measurement range is small. Thus, if the synthetic wavelength $\Lambda_{34}$ is used, the interference order $N_{34}$ of the synthetic wavelength $\Lambda_{34}$ becomes discontinuous when a step appears. However, the interference order $N_{34}(t_1)$ of the synthetic wavelength $\Lambda_{34}$ at the time $t = t_1$ can be calculated using equation (14).

A case in which the calculation flag is 0 in step S113, that is, the height difference on the surface 7 to be measured is equal to or smaller than half of $\Lambda_{34}$ at an interval between the start time $t'_0$ of the previous wavelength scan and $t_1$ will be described. In this case, in step S117, the calculation unit 8 updates the interference order $N_{34}$ recorded in step S107 to the interference order $N_{34}(t_1)$ calculated in step S112. Thereafter, the process returns to the calculation loop.

A case in which the calculation flag is 1 in step S113, that is, the height difference on the surface 7 to be measured is larger than half of $\Lambda_{34}$ at an interval between the start time $t'_0$ of the previous wavelength scan and $t_1$ will

be described. Since phase connection is impossible from the first time $t_a$ stored in step S109 to the second time $t_1$, the absolute distance D(t) after the first time is not calculated. The order $N_{34}(t_1)$ at t = $t_1$ has been calculated in step S112 and is known. In addition, the history of the phase difference of the synthetic wavelength $\Lambda_{34}$ during t = $t_a \sim t_1$ has been stored in the memory 81 in step S103. Thus, in step S114, the calculation unit 8 calculates backward the history of the order $N_{34}$ during t = $t_a \sim t_1$ using equation (16) from the order $N_{34}(t_1)$ at t = $t_1$ and the history of the phase difference of the synthetic wavelength $\Lambda_{34}$ during t = $t_a \sim t_1$:

$$N_{34}(i+1) = N_{34}(i) + round\{\phi_{34}(i+1) - \phi_{34}(i)\}$$

$$...(16)$$

In step S115, the calculation unit 8 calculates the absolute distance D(t) of the surface 7 to be measured at the interval between the time $t_a$ and the time $t_1$ in accordance with equation (17) using the history of a relative phase difference change of the synthetic wavelength $\Lambda_{34}$:

$$D(t) = (\Lambda_{34}/2) \times \{N_{34}(t) + (\phi_{34}(t)/2\pi)\} \qquad ...(17)$$

The calculation unit 8 returns the calculation flag to 0 in step S116, and in step S117, updates the interference order $N_{34}$ recorded in step S107 to the interference order $N_{34}$ calculated in step S112. The process then returns to the calculation loop. The second calculation unit 83 performs the calculation in steps S114 and S115 separately from the measurement loop processed by the first calculation unit 82, thereby preventing generation of a delay in the measurement loop time. As described above, the embodiment can reduce the wavelength scan amount, and provide a high-speed measurement apparatus having a wide measurement range with a simple arrangement.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions. For example, the embodiment has described a measure against the problem that the interference order becomes unknown when the height difference on a surface to be measured exceeds the synthetic wavelength $\Lambda_{34}$. The same measure can also apply to a case in which the interference order becomes unknown when light from the light source is temporarily cut off. The heterodyne interferometer has been described, but a homodyne interferometer is also available.

**Claims**

1.  A measurement apparatus which detects an interference signal generated by an interference between reference light irradiating a reference surface (6) and measurement light irradiating a surface (7) to be measured, thereby measuring one of a position and shape of the surface to be measured, the apparatus **characterized by** comprising:

    a first light source (1) which generates first light containing a scan section in which a wavelength is scanned between a first wavelength and a second wavelength;
    a second light source (2) which generates second light having a third wavelength;
    a first detector (10c) which detects a first interference signal generated by irradiating the reference surface and the surface to be measured with the first light generated by said first light source;
    a second detector (10b) which detects a second interference signal generated by irradiating the reference surface and the surface to be measured with the second light generated by said second light source; and
    a calculation unit (8) which calculates, based on data of a phase of the second interference signal detected by said second detector, one of the position and shape of the surface to be measured by using the third wavelength as a measurement wavelength that determines a measurement range,
    wherein the third wavelength is shorter than a synthetic wavelength of the first wavelength and the second wavelength, and
    said calculation unit calculates an order of the second interference signal after a first time based on a change of a phase of the first interference signal in the scan section after the first time, and calculates one of the position and shape of the surface to be measured after the first time by using the calculated order of the second interference signal and the data of the phase of the second interference signal.

2. A measurement apparatus which detects an interference signal generated by an interference between reference light irradiating a reference surface (6) and measurement light irradiating a surface (7) to be measured, thereby measuring one of a position and shape of the surface to be measured, the apparatus **characterized by** comprising:

a first light source (1) which generates first light containing a scan section in which a wavelength is scanned between a first wavelength and a second wavelength;

a second light source (2) which generates second light having a third wavelength;

a third light source (3) which generates third light having a fourth wavelength;

a first detector (10c) which detects a first interference signal generated by irradiating the reference surface and the surface to be measured with the first light generated by said first light source;

a second detector (10b) which detects a second interference signal generated by irradiating the reference surface and the surface to be measured with the second light generated by said second light source;

a third detector (10a) which detects a third interference signal generated by irradiating the reference surface and the surface to be measured with the third light generated by said third light source; and

a calculation unit (8) which calculates, based on data of a phase of the second interference signal and data of a phase of the third interference signal respectively detected by said second detector and said third detector, one of the position and shape of the surface to be measured by using a first synthetic wavelength of the third wavelength and the fourth wavelength as a measurement wavelength that determines a measurement range, wherein the first synthetic wavelength is shorter than a second synthetic wavelength of the first wavelength and the second wavelength, and

when an interference order of the first synthetic wavelength cannot be calculated from data of a phase of the first synthetic wavelength represented by a difference between the phase of the second interference signal and the phase of the third interference signal at a first time, said calculation unit calculates the interference order of the first synthetic wavelength after the first time based on a change of a phase of the first interference signal in the scan section after the first time, and calculates one of the position and shape of the surface to be measured after the first time by using the calculated interference order of the first synthetic wavelength and data of the phase of the first synthetic wavelength.

3. The apparatus according to claim 1, **characterized in that** said calculation unit calculates, from the change of the phase of the first interference signal in the scan section after the first time, an order of the first interference signal at a second time when the section ended, calculates an interference order of the measurement wavelength at the second time from the order of the first interference signal at the second time, calculates an interference order of the measurement wavelength after the first time from the interference order of the measurement wavelength at the second time and data of a phase of the measurement wavelength after the first time, and calculates one of the position and shape of the surface to be measured after the first time by using the calculated interference order of the measurement wavelength and the data of the phase of the measurement wavelength.

4. The apparatus according to claim 1, **characterized in that** said calculation unit includes

a first calculation unit which calculates a phase of the first interference signal and a phase of the measurement wavelength, and when an interference order of the measurement wavelength is calculated from data of the phase of the measurement wavelength, calculates the interference order of the measurement wavelength, and calculates one of the position and shape of the surface to be measured based on the calculated phase and interference order of the measurement wavelength, and

a second calculation unit which calculates an interference order of the measurement wavelength when the interference order of the measurement wavelength cannot be calculated from the data of the phase of the measurement wavelength.

5. The apparatus according to claim 1, **characterized in that** a first polarizing beam splitter which divides each of the first light generated by said first light source and the second light generated by said second light source into a first beam and a second beam, a modulation unit which modulates the second beam at a predetermined frequency, and a second polarizing beam splitter which combines the second beam modulated by the modulation unit and the first beam are interposed between said first light source and said second light source, and the reference surface and the surface to be measured.

6. The apparatus according to claim 2, **characterized in that** said calculation unit calculates, from the change of the phase of the first interference signal in the scan section after the first time, an order of the first interference signal at a second time when the section ended, calculates an interference order of the measurement wavelength at the second time from the order of the first interference signal at the second time, calculates an interference order of the measurement wavelength after the first time from the interference order of the measurement wavelength at the second time and data of a phase of the measurement wavelength after the first time, and calculates one of the position and shape of the surface to be measured after the first time by using the calculated interference order of the measurement wavelength and the data of the phase of the measurement wavelength.

7. The apparatus according to claim 2, **characterized in that** said calculation unit includes
a first calculation unit which calculates a phase of the first interference signal and a phase of the measurement wavelength, and when an interference order of the measurement wavelength is calculated from data of the phase of the measurement wavelength, calculates the interference order of the measurement wavelength, and calculates one of the position and shape of the surface to be measured based on the calculated phase and interference order of the measurement wavelength, and
a second calculation unit which calculates an interference order of the measurement wavelength when the interference order of the measurement wavelength cannot be calculated from the data of the phase of the measurement wavelength.

8. The apparatus according to claim 2, **characterized in that** a first polarizing beam splitter which divides each of the first light generated by said first light source, the second light generated by said second light source, and the third light generated by said third light source into a first beam and a second beam, a modulation unit which modulates the second beam at a predetermined frequency, and a second polarizing beam splitter which combines the second beam modulated by the modulation unit and the first beam are interposed between said first light source, said second light source, and said third light source, and the reference surface and the surface to be measured.

# F I G. 1

# F I G. 2A

WAVELENGTH STABILIZATION CONTROL
FIRST REFERENCE WAVEFORM::λ1

WAVELENGTH
CONTROL LOOP?

**S401**

SCAN WAVELENGTH (λ1 → λ2)

**S402**

WAVELENGTH STABILIZATION CONTROL
SECOND REFERENCE WAVEFORM λ2

**S403**

SCAN WAVELENGTH (λ2 → λ1)

**S404**

WAVELENGTH STABILIZATION CONTROL
FIRST REFERENCE WAVEFORM λ1

WAVELENGTH
SCAN
COMPLETION
FLAG

①

②

END OF
MEASUREMENT

# F I G. 2B

START OF MEASUREMENT

CALCULATION FLAG = 0

WAVELENGTH STABILIZATION CONTROL THIRD REFERENCE WAVEFORM ::λ3

WAVELENGTH STABILIZATION CONTROL FOURTH REFERENCE WAVEFORM ::λ4

MEASUREMENT LOOP? — ②

S201 MEASURE PHASE φa(t)

MEASURE PHASES φ3(t) and φ4(t) — S101

CALCULATE SYNTHETIC WAVELENGTH Λ34 — S102

S202 PHASE MEASUREMENT HISTORY

PHASE MEASUREMENT HISTORY — S103

PHASE MEASUREMENT RESULT

S110 CORRECT CALCULATION FROM PHASE MEASUREMENT RESULT φa(t0) TO φ'a(t1)

① WAVELENGTH SCAN COMPLETION FLAG

S104 WAVELENGTH SCAN COMPLETED?

COMPLETED

UNCOMPLETED

S111 CALCULATE INTERFERENCE ORDER M12(t1)

S112 CALCULATE INTERFERENCE ORDERS M23(t1) AND N34(t1)

S105 | h(t) | < Λ34/2?  YES

NO

S106 CALCULATION FLAG = 0?

NO

S113 CALCULATION FLAG = 1?

NO

YES

S109 STORE TIME ta = t CALCULATION FLAG = 1

S114 CALCULATE INTERFERENCE ORDER N34(ta ~ t1)

S117 UPDATE N34(t1)

CALCULATE INTERFERENCE ORDER N34 — S107

S115 CALCULATE ABSOLUTE DISTANCE D(ta ~ t1)

CALCULATE ABSOLUTE DISTANCE D(t) — S108

S116 CALCULATION FLAG = 0

14

# F I G. 3

# F I G. 4

ABSOLUTE DISTANCE
OF SURFACE TO BE
MEASURED

$\Lambda_{34}/2$

WAVELENGTH

$\lambda 4$ — FIXED-WAVELENGTH LASER 2

$\lambda 3$ — FIXED-WAVELENGTH LASER 1

WAVELENGTH-TUNABLE LASER

$\lambda 2$

$\lambda 1$

$t'_0$  $t'_1$  $t_0$  $t_1$   TIME t

# F I G. 5

ABSOLUTE DISTANCE
OF SURFACE TO BE
MEASURED

$h > \Lambda_{34}/2$

WAVELENGTH

FIXED-WAVELENGTH
LASER 2

$\lambda 4$

FIXED-WAVELENGTH
LASER 1

$\lambda 3$

WAVELENGTH-TUNABLE
LASER

$\lambda 2$

$\lambda 1$

$t'_0$   $t'_1$   $t_a$   $t_0$   $t_1$   TIME t

EP 2 581 700 A1

EUROPEAN SEARCH REPORT

Application Number

EP 12 00 6482

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/211198 A1 (KODA YUSUKE [JP] ET AL) 1 September 2011 (2011-09-01) | 1,3-5 | INV. G01B9/02 |
| Y | * the whole document * | 2,6-8 | |
| Y | R DÄNDLIKER ET AL: "Distance measurement by multiple-wavelength interferometry", JOURNAL OF OPTICS, vol. 29, no. 3, 1 June 1998 (1998-06-01), pages 105-114, XP055050854, ISSN: 0150-536X, DOI: 10.1088/0150-536X/29/3/002 * the whole document * | 2,6-8 | |
| A | KONSTANTINOS FALAGGIS ET AL: "<title>A hybrid technique for ultra-high dynamic range interferometry</title>", PROCEEDINGS OF SPIE, vol. 7063, 10 August 2008 (2008-08-10), pages 70630X-70630X-8, XP055050882, ISSN: 0277-786X, DOI: 10.1117/12.795293 * the whole document * | 1-8 | |
| A,D | JP 10 281738 A (FUJI XEROX CO LTD) 23 October 1998 (1998-10-23) * the whole document * | 1-8 | TECHNICAL FIELDS SEARCHED (IPC) G01B |

The present search report has been drawn up for all claims

| Place of search | Date of completion of the search | Examiner |
|---|---|---|
| Munich | 28 January 2013 | Stanciu, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 12 00 6482

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2013

| Patent document cited in search report | Publication date | Patent family member(s) | Publication date |
|---|---|---|---|
| US 2011211198 A1 | 01-09-2011 | JP 2011179934 A<br>US 2011211198 A1 | 15-09-2011<br>01-09-2011 |
| JP 10281738 A | 23-10-1998 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5052540 A

- JP 10281738 A

### Non-patent literature cited in the description

- **U. VRY ; F. FERCHER.** High-order statistical properties of speckle fields and their application to rough-surface interferometry. *J. Opt. Soc. Am. A,* 1986, vol. 3 (7), 988-1000